# EUROPÄISCHE PATENTSCHRIFT

(11) **EP 2 828 744 B1**
(45) Veröffentlichungstag und Bekanntmachung des Hinweises auf die Patenterteilung: **05.09.2018**
(21) Anmeldenummer: 12821112.5
(22) Anmeldetag: 21.12.2012
(51) Int. Cl.: G06F 9/445, H04B 5/00, H04L 12/44, H04L 29/06, H04W 12/02, H04L 12/24, H04W 4/21, H04W 4/80

(54) **VERFAHREN ZUM AUFBAU EINES STERNFÖRMIGEN KOMMUNIKATIONSNETZES BESTEHEND AUS EINEM ZENTRALKNOTEN UND PERIPHERKNOTEN DURCH EINE VOM ZENTRALKNOTEN BEREITGESTELLTE WEB APPLIKATION BASIEREND AUF HARDWARE IDENTIFIERN**
METHOD FOR SETTING UP A STAR-SHAPED COMMUNICATION NETWORK CONSISTING OF A CENTRAL NODE AND PERIPHERAL NODES VIA A WEB APPLICATION PROVIDED BY THE CENTRAL NODE ON THE BASIS OF HARDWARE IDENTIFIERS
PROCÉDÉ D'ÉTABLISSEMENT D'UN RÉSEAU DE COMMUNICATION EN ÉTOILE COMPOSÉ D'UN NOEUD CENTRAL ET DE NOEUDS PÉRIPHÉRIQUES AU MOYEN D'UNE APPLICATION WEB FOURNIE PAR LE NOEUD CENTRAL SUR LA BASE D'IDENTIFIANTS DE MATÉRIEL

(30) Priorität: 23.12.2011 WO PCT/EP2011/006560; 05.12.2012 DE 102012111833
(43) Veröffentlichungstag der Anmeldung: 28.01.2015
(73) Patentinhaber: Appbyyou GmbH, 78582 Balgheim (DE)
(72) Erfinder: WINKLER-TEUFEL, Alexandra, 78582 Balgheim (DE); ERIK, Igor, 78647 Trossingen (DE)
(74) Vertreter: Geitz Truckenmüller Lucht Christ
(86) Internationale Anmeldenummer: PCT/DE2012/100399
(87) Internationale Veröffentlichungsnummer: WO 2013/110254

(56) Entgegenhaltungen:
- US-A1- 2002 199 007
- US-A1- 2005 286 466
- US-A1- 2007 150 946
- US-B1- 7 065 070

## Beschreibung

Die vorliegende Erfindung betrifft ein Verfahren zum Aufbau eines sternförmigen Kommunikationsnetzes.

Insbesondere mit der stark zunehmenden Verbreitung von Smartphones gewinnt die Kommunikation im täglichen Leben weiterhin mehr und mehr an Bedeutung. Innerhalb des heterogenen Internet bilden sich untergeordnete Kommunikationsnetze, welche teilweise öffentlich und teilweise geschützt aufgestellt sind.

Als bekannte und beliebte Kommunikationsform ist es bekannt, beispielsweise Voice-over-IP-Dienste, wie den bekannten Internetdienst "Skype", zu verwenden, bei welchem eine Anmeldung an einem Internetserver erfolgt, welcher dann eine Peer-to-Peer-Verbindung zwischen den Gespräch führenden Endstellen herstellt. Durch eine Anmeldung werden die jeweils aktuellen Internetadressen der teilnehmenden Clients beim Server registriert, so dass zum Einen eine Information darüber ausgetauscht wird, welche Teilnehmer einer Community zu einem bestimmten Zeitpunkt aktiv sind und zum Anderen hierüber eine Adressierung der Gesprächspartner beim Aufbau der Kommunikationsverbindung zwischen den Gesprächspartnern erlaubt wird. Eine Beschränkung der Teilnehmer der Community ist hierbei dadurch möglich, dass derartige Systeme eine sogenannte "Buddylist" führen, über welche die Ansprechbarkeit einzelner Knoten organisiert wird.

So werden sich also für eine derartige Kommunikation mehrere Clients an einem im Internet verfügbaren Server anmelden, um dann unter Vermittlung des Servers ein Voice-over-IP-Gespräch zu beginnen. Auch andere Daten können auf diesem Weg übertragen werden, jeweils jedoch unter Zwischenschaltung des Internetservers.

Die Gesprächsqualität bei einer derartigen Verbindung hängt jedoch weitgehend mit von der Infrastruktur zwischen den Teilnehmern ab, ebenso wie von der Infrastruktur, welche belastungsabhängig gerade vom Anbieter zur Verfügung gestellt werden kann.

Deshalb und insbesondere bei sicherheitsrelevanten Anwendungen ist es gewünscht, auf zentrale Server zu verzichten, um somit die Kommunikation von vertraulichen Daten über möglichst wenige unkontrollierte Wege laufen lassen zu müssen.

Eine Möglichkeit der Reaktion auf diese Problematik besteht darin, dass die Betreiber von Kommunikationsnetzen eigene Softwaresysteme entwickeln, welche dann beispielsweise betriebsintern genutzt werden können. Im privaten Bereich scheitert ein derartiges Vorhaben jedoch regelmäßig daran, dass zur Distribution einer derartigen eigenen Smartphone-Applikation relativ hohe Gebühren für deren Einstellung in den einschlägigen Märkten entrichtet werden müssen.

Die vorliegende Erfindung soll vor diesem Hintergrund eine Lösung schaffen, im privaten Bereich ein Kommunikationsnetz auf Basis einer personalisierten Software aufzubauen, welches eine effektive Zugangskontrolle besitzt und gleichzeitig ohne größere Kosten verteilt werden kann.

Gelöst wird diese Aufgabe durch ein Verfahren zum Aufbau eines sternförmigen Kommunikationsnetzes gemäß den Merkmalen des Anspruchs 1. Weitere, sinnvolle Ausgestaltungen dieses Verfahrens können den Unteransprüchen entnommen werden.

Erfindungsgemäß ist zum Aufbau eines sternförmigen Kommunikationsnetzes in diesem Bereich vorgesehen, dass zunächst ein künftiger Zentralknoten, welcher von einem Zentralgerät gebildet wird, ein Softwaregenerator beispielsweise von einem Marktserver herunterlädt, so dass die wesentliche Investition zum Aufbau des sternförmigen Kommunikationsnetzes allenfalls in der Beschaffung dieses Softwaregenerators liegt. Soweit dieser kostenlos angeboten wird, fallen in diesem Schritt ansonsten lediglich die Netzbetreiberkosten an. Mithilfe des Softwaregenerators wird sodann ein Programmprodukt erstellt, welches eine Kommunikationsschnittstelle aufweist. Dieses wird als native Applikation direkt auf dem Zentralgerät ausgeführt, welches damit den Zentralknoten des neu zu bildenden sternförmigen Kommunikationsnetzes repräsentiert. Peripherknoten, also solche Knoten welche mit dem Zentralknoten kommunizieren können, werden dann dadurch gebildet, dass zunächst das Programmprodukt seinerseits eine Internetapplikation generiert, welche es zur Ausführung durch das Periphergerät bereitstellt.

Einerseits ist eine Bereitstellung direkt auf einem virtuellen Server des Zentralgeräts möglich, andererseits kann diese auf einem Internetserver erfolgen, auf dem die Internetapplikation zur Ausführung durch das Periphergerät bereitgestellt wird.

Die Ausführung erfolgt dann in einem Internetbrowser des Periphergerätes und somit nicht als native Applikation, sondern als "Webapp", so dass durch diese Art der Bereitstellung weder die Kosten einer Bereitstellung noch eventuelle Kosten eines Bezuges durch das Periphergerät entstehen. Die von dem Programmprodukt generierte Internetapplikation wird hierbei so ausgestaltet, dass diese ausschließlich zur Kommunikation mit dem Zentralknoten und der darauf ablaufenden, nativen Applikation geeignet ist. Dies kann etwa durch geeignete Zugangscodes, welche beispielsweise an eindeutige Hardwareadressen des Zentralgerätes angelehnt sein können, erfolgen.

Auf diese Art und Weise kann ein Kommunikationssystem in Form eines sternförmigen Kommunikationsnetzes aufgebaut werden, indem jeder gewünschte Teilnehmer als Periphergerät dadurch hinzugefügt werden kann, dass auf dem Periphergerät die zur Kommunikation mit dem Zentralknoten geeignete Internetapplikation ausgeführt wird.

In Weiterbildung dieses Verfahrens kann das Programmprodukt die auf dem Internetserver oder der sonstigen hierfür geeigneten Einrichtung bereitgestellte Internetapplikation auf einen einzelnen Benutzer anpassen, indem in der nativen Applikation des Zentralknotens beispielsweise ein eindeutiger Code des Periphergeräts hinterlegt wird. Ein derartiger Zugriffscode, welcher zwischen den Benutzern bekannt gemacht wird, wird dann im Zentralknoten in eine Whitelist eingetragen, so dass bei jedem Kommunikationsaufbau zwischen dem betreffenden Periphergerät und dem Zentralgerät die Validität des Zugriffscodes überprüft wird.

Um den Austausch des Codes über dritte Kanäle zu vermeiden und sowohl die Bedienung zu vereinfachen als auch eine größere Sicherheit hinzuzufügen, sieht das Verfahren in einer konkreten Ausgestaltung vor, dass die Internetapplikation, welche für ein spezielles, eindeutig identifiziertes Periphergerät generiert wurde, ihre Ausführbarkeit an die eindeutige Hardwareadresse des Periphergeräts knüpft und somit von einem anderen Periphergerät aus nicht ausgeführt werden kann. Hierdurch wird sichergestellt, dass ein Weitergeben der Software nicht möglich ist, um den Kreis der beteiligten Kommunikationsteilnehmer in einem kontrollierten Rahmen zu halten. In dem Fall, dass ein neues Gerät beschafft wird oder dergleichen ist es zur weiteren Teilnahme am Kommunikationsnetz lediglich erforderlich, dass auf dem Zentralknoten eine neue Internetapplikation generiert und für den Nutzer mit dem geänderten Periphergerät bereitgestellt wird.

Das Verfahren wird dadurch weiter vereinfacht, dass die eindeutige Hardwareadresse im Vorfeld der Generierung der Internetapplikation direkt zwischen dem Zentralgerät und dem Peripheriegerät ausgetauscht wird. Dies kann beispielsweise über eine Nahfeldkommunikation erfolgen, so dass ausgeschlossen werden kann, dass ein Abhören der Zugangsdaten stattfindet. Insbesondere kann die Übergabe der erforderlichen Daten dadurch erfolgen, dass die jeweils von einem an das andere Gerät zu übertragenden Daten zunächst in einem zweidimensionalen Barcode verschlüsselt werden und dieser auf dem Display des jeweils sendenden Gerätes wiedergegeben wird. Durch ein Scannen dieses zweidimensionalen Barcodes von dem Display des sendenden Gerätes kann das empfangende Gerät diese Daten aufzeichnen, entschlüsseln und dann weiter verwerten. So wird auf diesem Weg beispielsweise zunächst die zur Identifizierung erforderliche Hardwareadresse des Periphergerätes an das Zentralgerät übertragen und im umgekehrten Weg die Aufrufadresse bzw. erforderliche Zugriffscodes für die Internetapplikation, welche dem Periphergerät nunmehr eindeutig zugeordnet wird, von dem Zentralgerät an das Periphergerät gesendet.

Um die Daten in geeigneter Weise verarbeiten zu können, kann es in diesem Fall sinnvoll sein, wenn der Softwaregenerator, mit welchem initial die native Applikation auf dem Zentralgerät erstellt wurde, auch auf dem Periphergerät installiert ist und dazu hergerichtet ist, die Nahfeldkommunikation abzuwickeln. Auf die Nutzung zusätzlicher Software und die Schaffung geeigneter Datenschnittstellen kann auf diesem Weg verzichtet werden.

In diesem sternförmigen Kommunikationsnetz ist es nunmehr in erster Linie vorgesehen, dass eine Kommunikation jeweils zwischen einem Peripherknoten und dem Zentralknoten stattfindet. Der Vorteil dieser Anordnung besteht im Wesentlichen in der Bedienbarkeit für den Smartphone-Benutzer. Dieser hat auf seinem Smartphone hierdurch eine eigene Applikation für jeden Gesprächspartner, wobei dieser Gesprächspartner stets der Zentralknoten eines eigenen Kommunikationsnetzwerks ist. Die gängigen Smartphone-Betriebssysteme erlauben es, eine derartige Internetapplikation direkt auf der Oberfläche zu verlinken, so dass mit einem Klick aus der Betriebssystem-Oberfläche heraus ein Gespräch mit der jeweils gewünschten Person ohne Umwege ermöglicht wird.

Dadurch, dass jeder Gesprächspartner für sich als Zentralknoten ein entsprechendes sternförmiges Kommunikationsnetz aufbaut, ist es möglich, dass jeder betroffene Knoten jeweils in seinem Netz gleichzeitig ein Zentralgerät ist und umgekehrt in einem oder mehreren fremden Netzen als Periphergerät fungiert. Durch die Überlagerung derartiger Kommunikationsnetz-Architekturen kann die Kommunikation mit dem Smartphone stark vereinfacht und an die Bedürfnisse der Nutzer angepasst werden. Eine Datenübermittlung ist über eine derartige Kommunikationsverbindung innerhalb des gesamten Kommunikationsnetzes ebenso möglich, wie das Führen von Gesprächen.

Ergänzend ist es jedoch auch möglich, den Zentralknoten als Vermittlungsknoten einzusetzen, so dass auch zwischen mehreren Peripherknoten unter Zwischenschaltung des Zentralknotens eine Kommunikationsverbindung aufgebaut werden kann.

Die vorstehend beschriebene Erfindung wird im Folgenden anhand eines Ausführungsbeispiels näher erläutert.

Es zeigen
- Figur 1: eine schematische Darstellung der Verteilung der zur Kommunikation erforderlichen Applikationen, und
- Figur 2: eine schematische Darstellung der Kommunikation in dem sternförmigen Kommunikationsnetz um das Zentralgerät herum.

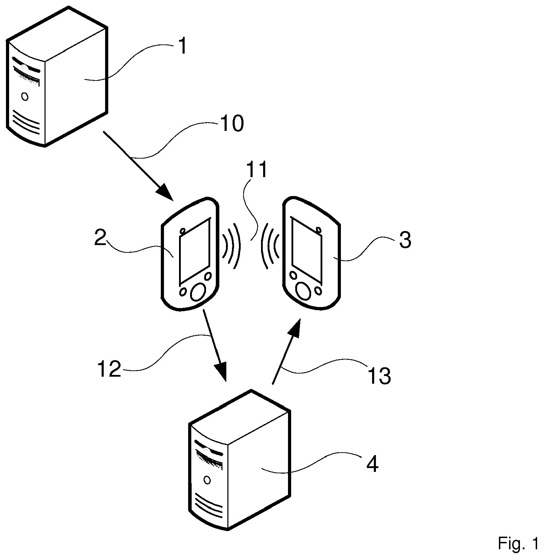

Figur 1 zeigt den Ablauf des Aufbaus eines sternförmigen Kommunikationsnetzes um ein Zentralgerät 2 herum, auf welches zunächst von einem Marktserver 1, auf welchem verschiedene Applikationen für Mobilgeräte bereitgehalten werden, eine Übertragung eines Softwaregenerators 10 ausgelöst wird. Mithilfe dieses Softwaregenerators, welcher seinerseits eine Applikation für Mobilgeräte ist, wird auf dem Zentralgerät 2 eine native Applikation erstellt, welche nach ihrer Erstellung auf dem Zentralgerät 2 abläuft. Diese native Applikation realisiert einen Zentralknoten des aufzubauenden, sternförmigen Kommunikationsnetzes, mit welchem später die hinzugefügten Peripherknoten kommunizieren können.

Um nunmehr einen Peripherknoten hinzuzufügen, wird ein den Peripherknoten realisierendes Periphergerät 3 über eine Nahfeldkommunikation 11 mit dem Zentralgerät 2 verbunden, so dass die beiden Geräte 2, 3 einen Austausch erforderlicher Daten vornehmen können. Diese Daten umfassen zunächst aufseiten des Periphergeräts 3 dessen Hardwareadresse, welche zunächst in einen zweidimensionalen Barcode (QR-Code) kodiert wird, der auf einem Display des Periphergeräts 3 dargestellt wird. Mit einem optischen Sensor des Zentralgeräts 2 wird dieser zweidimensionale Barcode gescannt und mithilfe der darin verschlüsselten Daten von der nativen Applikation eine Internetapplikation generiert, welche beim Ausführen eine Abfrage hinsichtlich der Hardwareadresse des ausführenden Gerätes durchführt. Eine Nutzung der Internetapplikation wird dann lediglich auf einem Gerät mit der vorgegebenen Hardwareadresse stattfinden können. Dadurch ist die speziell aufgrund der Durchführung der Nahfeldkommunikation 11 erstellte Internetapplikation an die an dieser Nahfeldkommunikation 11 teilnehmenden Geräte geknüpft.

Es erfolgt vonseiten des Zentralgeräts 2 eine Bereitstellung der Internetapplikation auf einem Internetserver, auf dem dann wiederum auf Veranlassung des Periphergeräts 3 eine Ausführung der Internetapplikation 13 ausgelöst werden kann. Die für den Aufruf bzw. die Ausführung erforderlichen Zugriffsdaten, welche ebenfalls auf dem Zentralgerät 2 von der nativen Applikation festgelegt worden sind, wird diese wiederum in einen zweidimensionalen Barcode umsetzen und diesen auf dem Display des Zentralgeräts 2 darstellen, so dass auf umgekehrtem Weg mithilfe eines optischen Sensors des Periphergeräts 3 die Zugriffsdaten von dem Zentralgerät 2 übernommen werden können.

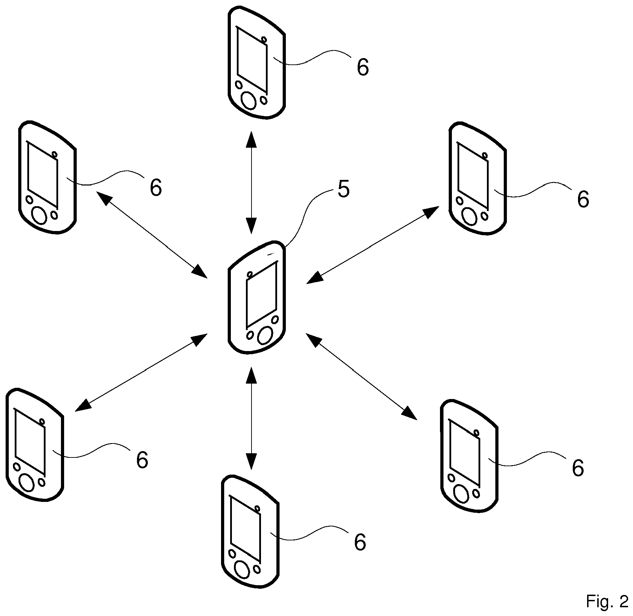

Anschließend ist nach mehrfacher Wiederholung dieses Vorgangs mit unterschiedlichen Periphergeräten 3 ein sternförmiges Kommunikationsnetz gemäß Figur 2 aufgebaut, bei welchem ein Zentralgerät 2 einen Zentralknoten 5 realisiert, während die Periphergeräte 3 jeweils Peripherknoten 6 darstellen. Die Peripherknoten 6 können dann jeweils mit dem Zentralknoten 5 kommunizieren, während eine gegenseitige Kommunikation unter den Peripherknoten 6 lediglich dann möglich ist, wenn der Zentralknoten 5 als Vermittlungsstelle fungiert. Durch ein Überlagern einer Vielzahl solcher sternförmiger Kommunikationsnetze kann in einfacher Weise ein flexibles, an unterschiedlichste Bedürfnisse anpassbares Gesamtnetzwerk erstellt und sicher betrieben werden.

### BEZUGSZEICHENLISTE

- 1: Marktserver
- 2: Zentralgerät
- 3: Periphergerät
- 4: Internetserver
- 5: Zentralknoten
- 6: Peripherknoten
- 10: Übertragung des Softwaregenerators
- 11: Nahfeldkommunikation
- 12: Bereitstellung der Internetapplikation
- 13: Ausführen der Internetapplikation

## Patentansprüche

1. Verfahren zum Aufbau eines sternförmigen Kommunikationsnetzes, bei dem zunächst ein Zentralknoten (5) auf einem Zentralgerät (2) dadurch erstellt wird, dass ein auf dem Zentralgerät (2) ablaufender Softwaregenerator ein Programmprodukt mit einer Kommunikationsschnittstelle generiert und das Zentralgerät (2) dieses Programmprodukt als native Applikation ausführt, und ein Hinzufügen von Peripherknoten (6) zu dem Kommunikationsnetz dadurch erfolgt, dass das Programmprodukt eine Internetapplikation zur ausschließlichen Kommunikation mit dem Zentralknoten (5) generiert und zur Ausführung auf einem Periphergerät (3) bereitstellt,
**dadurch gekennzeichnet, dass** das Programmprodukt die Internetapplikation auf einem Internetserver (4) bereitstellt, welcher von dem Periphergerät (3) über eine Datenverbindung zugreifbar ist und auf dem Periphergerät in einem Internetbrowser ausgeführt wird, wobei das Programmprodukt für jeden hinzuzufügenden Peripherknoten (6) eine eigene, identifizierbare Internetapplikation generiert und im Vorfeld der Generierung einer Internetapplikation für einen Peripherknoten (6) das zugehörige Periphergerät (3) bei dem Zentralknoten (5) eindeutig identifiziert und die Ausführbarkeit der für diesen Peripherknoten (6) zu generierenden Internetapplikation an eine eindeutige Hardwareadresse des Periphergeräts (3) geknüpft wird, wobei die eindeutige Hardwareadresse im Vorfeld der Generierung einer Internetapplikation über eine Nahfeldkommunikation (11) zwischen dem Zentralgerät (2) und dem Periphergerät (3) ausgetauscht wird und diese Nahfeldkommunikation (11) zwischen dem Zentralgerät und einem Periphergerät (3) dadurch abläuft, dass die zu übertragenden Daten in einem zweidimensionalen Barcode verschlüsselt und auf einem Display jeweils sendenden Geräts (2, 3) wiedergegeben und mit einem optischen Sensor des jeweils empfangenden Geräts (3, 2) aufgezeichnet und in dem empfangenden Gerät (3, 2) entschlüsselt wird.

2. Verfahren gemäß Anspruch 1, **dadurch gekennzeichnet, dass** das Programmprodukt jeder Internetapplikation einen eindeutigen Zugriffscode zuordnet, welcher die Internetapplikation bei einer Kommunikation mit dem Zentralknoten (5) identifiziert.

3. Verfahren gemäß Anspruch 2, **dadurch gekennzeichnet, dass** das Programmprodukt eine Whitelist führt, in welcher die Zugriffscodes aller von dem Programmprodukt generierten Internetapplikationen gespeichert sind, wobei im Zuge des Kommunikationsaufbaus zwischen dem Zentralknoten (5) und einem Peripherknoten (6) unter Verwendung des Zugriffscodes die Whitelist hinsichtlich der Validität des Zugriffscodes überprüft wird.

4. Verfahren gemäß einem der vorhergehenden Ansprüche, **dadurch gekennzeichnet, dass** zur Durchführung der Nahfeldkommunikation (11) der Softwaregenerator mit einer Nahfeldkommunikationsschnittstelle ausgestattet ist und auch auf dem Periphergerät (3) ausgeführt wird.

5. Verfahren gemäß einem der vorhergehenden Ansprüche, **dadurch gekennzeichnet, dass** der Zentralknoten (5) als Vermittlungsknoten zwischen mehreren Peripherknoten (6) eingesetzt werden kann.

## Claims

1. A method for constructing a radial communication network, in which firstly a central node (5) is created on a central device (2) in that a software generator running on the central device (2) generates a program product having a communication interface and the central device (2) executes this program product as a native application, and adding of peripheral nodes (6) to the communication network is carried out in that the program product generates an Internet application for exclusive communication with the central node (5) and provides it for execution on the peripheral device (3),
**characterized in that** the program product provides the Internet application on an Internet server (4), which is accessible by the peripheral device (3) via a data connection and is executed on the peripheral device in an Internet browser, wherein the program product generates a separate, identifiable Internet application for every peripheral node (6) to be added and, prior to generating an Internet application for a peripheral node (6), uniquely identifies the associated peripheral device (3) with the central node (5), and the executability of the Internet application to be generated for this peripheral node (6) is linked to a unique hardware address of the peripheral device (3), wherein the unique hardware address is exchanged before the generation of an Internet application via a near-field communication (11) between the central device (2) and the peripheral device (3) and this near-field communication (11) between the central device and a peripheral device (3) takes place **in that** the data to be transmitted is encrypted in a two-dimensional barcode and displayed on a display screen of the respective transmitting device (2, 3) and recorded using an optical sensor of the respective receiving device (3, 2) and decrypted in the receiving device (3, 2).

2. The method according to Claim 1, **characterized in that** the program product assigns a unique access code to each Internet application, which identifies the Internet application during a communication with the central node (5).

3. The method according to Claim 2, **characterized in that** the program product keeps a whitelist, in which the access codes of all Internet applications generated by the program product are stored, wherein in the course of establishing the communication between the central node (5) and a peripheral node (6) using the access code, the whitelist is checked with respect to the validity of the access code.

4. The method according to any one of the preceding claims, **characterized in that**, to carry out the near-field communication (11), the software generator is equipped with a near-field communication interface and is also executed on the peripheral device (3).

5. The method according to any one of the preceding claims, **characterized in that** the central node (5) can be used as a switching node between multiple peripheral nodes (6).

## Revendications

1. Procédé d'établissement d'un réseau de communication en étoile, pour lequel un noeud central (5) est d'abord établi sur un appareil central (2) par la génération d'un produit de programme avec une interface de communication par un générateur de logiciel fonctionnant sur l'appareil central (2) et par l'exécution de ce produit de programme par l'appareil central (2) en tant qu'application native, et des noeuds périphériques (6) sont ajoutés au réseau de communication par la génération par le produit de programme d'une application Internet pour la communication exclusive avec le noeud central (5) et pour l'exécution sur un appareil périphérique (3),
**caractérisé en ce que** le produit de programme fournit l'application Internet sur un serveur Internet (4) accessible à partir de l'appareil périphérique (3) via une connexion de données et exécuté dans un navigateur Internet sur l'appareil périphérique, où le produit de programme génère pour chaque noeud périphérique (6) à ajouter une application Internet identifiable propre et, préalablement à la génération d'une application Internet pour un noeud périphérique (6), l'appareil périphérique (3) correspondant auprès du noeud central (5) est identifié de manière univoque et la faisabilité de l'application Internet à générer pour ce noeud périphérique (6) est reliée à une adresse du matériel univoque de l'appareil périphérique (3), où, préalablement à la génération d'une application Internet, l'adresse du matériel univoque est échangée entre l'appareil central (2) et l'appareil périphérique (3) via une communication de proximité (11), et cette communication de proximité (11) entre l'appareil central et un appareil périphérique (3) se déroule **en ce que** les données à transmettre sont cryptées dans un code-barre bidimensionnel et reproduites sur un écran de l'appareil émetteur correspondant (2, 3) et enregistrées par un capteur optique de l'appareil récepteur correspondant (3, 2) et décryptées par l'appareil récepteur (3, 2).

2. Procédé selon la revendication 1, **caractérisé en ce que** le produit de programme affecte à chaque application Internet un code d'accès univoque qui identifie l'application Internet lors d'une communication avec le noeud central (5).

3. Procédé selon la revendication 2, **caractérisé en ce que** le produit de programme tient une liste blanche, dans laquelle sont enregistrés les codes d'accès de toutes les applications Internet générées par le produit de programme, où la liste blanche est vérifiée en matière de validité du code d'accès au cours de l'établissement de la communication entre le noeud central (5) et un noeud périphérique (6) au moyen du code d'accès.

4. Procédé selon l'une quelconque des revendications précédentes, **caractérisé en ce que** le générateur de logiciel est équipé d'une interface de communication de proximité pour la réalisation de la communication de proximité (11) et est également exécuté sur l'appareil périphérique (3).

5. Procédé selon l'une quelconque des revendications précédentes, **caractérisé en ce que** le noeud central (5) peut être utilisé en tant que noeud de commutation entre plusieurs noeuds périphériques (6).
